# EUROPEAN PATENT APPLICATION

(11) **EP 4 339 875 A1**
(43) Date of publication of application: **20.03.2024**
(21) Application number: 22806371.5
(22) Date of filing: 07.04.2022
(51) Int. Cl.: G06Q 50/20

(54) **CAREER ASPIRATION-BASED EDUCATIONAL METHOD AND SYSTEM**

(30) Priority: 11.05.2021 CN 202110512550
(71) Applicant: Zhejiang Geely Holding Group Co., Ltd., Hangzhou, Zhejiang 310051 (CN)
(72) Inventor: LI, Shufu, Hangzhou, Zhejiang 310051 (CN); LU, Dan, Hangzhou, Zhejiang 310051 (CN)
(74) Representative: Zaboliene, Reda
(86) International application number: PCT/CN2022/085549
(87) International publication number: WO 2022/237401

(57) **Abstract**

A career aspiration-based educational method and system. The educational method comprises: according to user information, determining and recommending a user an ideal occupational role for the user to select a target occupational role (S 102); searching in a capability and knowledge system library of occupational roles so as to determine a capability and knowledge system required for the target occupational role, and pre-establishing a capability and knowledge system library of the occupational role by means of collecting occupational qualification data (S104); customizing a personalized course system for the user according to the capability and knowledge system required for the target occupational role (S 106); and providing the teaching of a corresponding course to the user according to the personalized course system (S108).

## Description

### TECHNICAL FIELD

The invention relates to the field of educational technology, in particular to a career aspiration-based educational method and system.

### BACKGROUND TECHNIQUE

At present, the level and scale of global higher education have reached an unprecedented height. At the same time, higher education has developed to today, universities and educational institutions around the world have accumulated a large number of high-quality courses. However, due to the limited operating costs of colleges and universities, limited teaching staff and teachers' own experience, colleges and universities can not meet the needs of individual education for every student by relying on their own teaching resources, and can not provide each student with an exclusive talent training program to meet their career dreams. As a result, there is a big gap between what many students learn and their career dreams during higher education, which greatly wastes valuable learning time and educational resources. Moreover, it is difficult for students to quickly enter professional roles once they enter the workplace.

At present, many explorations have been made on personalized education methods, but most of them are limited to optimizing classroom teaching methods (such as using small class teaching, increasing interaction, etc.) and reducing the ratio of students to teachers as much as possible. The educational ideal of "everyone has thousands of faces" is still far away, or there is a deviation in the path.

Therefore, there is an urgent need to develop a method that can form an educational training program that is unique to each student according to the student's career aspiration.

### SUMMARY OF THE INVENTION

In view of the above problems, a career aspiration-based educational method and system to overcome the above problems or at least partially solve the above problems is proposed.

An object of the present invention is to provide an educational method that can provide a user with an ability and knowledge course teaching corresponding to a user's career aspiration.

A further purpose of the present invention is to accurately lock the ideal career role of the user through the psychological portrait.

Yet another further purpose of the present invention is to form a personalized course system exclusive to each user through big data collection and rational collocation of global high-quality educational resources.

A further object of the present invention is to use block chain, audio and video and holographic image technologies in the online teaching process to improve the privacy, security and effect of teaching.

In particular, according to an aspect of the embodiments of the present invention, A career aspiration-based educational method is provided, including:
determining and recommending an ideal career role for a user according to a user information so that the user can select a target career role ;
searching an ability knowledge system library of a career role to determine the ability and knowledge system required by the target career role, the ability knowledge system library of the career role is pre-established by collecting occupational qualification data;
customizing a personalized course system of the user according to the ability and knowledge system required by the target career role;
according to the personalized course system, providing teaching of a corresponding course for the user.

In one embodiment, the step of determining and recommending the ideal career role for a user according to a user information includes:
according to the user information, carrying out a psychological portrait of the user through artificial intelligence to identify a personalized characteristic of the user;
determining and recommending the ideal career role for the user according to the personalized characteristic of the user.

In one embodiment, the step of customizing the personalized course system of the user according to the ability and knowledge system required by the target career role includes:
according to the ability and knowledge system required by the target career role, selecting a required course from the pre-established education course library through big data analysis to form the personalized course system of the user.

In one embodiment, the personalized course system includes an offline course and/or an online course.

In one embodiment, when the personalized course system includes the online course, the step of according to the personalized course system, providing teaching of a corresponding course for the user includes:
providing a teaching resource for the online course to the user based on at least one of the following:
block-chain technology, audio and video technology, holographic imaging technology.

In one embodiment, after customizing a personalized course system of the user according to the ability and knowledge system required by the target career role, the method further includes:
regularly carrying out psychological portrait of the user through the artificial intelligence, adjusting the ability and knowledge system required for the target career role according to the results of the psychological portrait, and optimizing the personalized course system of the user according to an adjusted ability and knowledge system required for the target career role.

In one embodiment, after customizing the personalized course system of the user according to the ability and knowledge system required by the target career role, the method further includes:
receiving a career role adjustment request for the user, and adjusting the target career role of the user according to the career role adjustment request;
searching the ability knowledge system library of the career role to determine an ability and knowledge system required by the adjusted target career role;
customize a personalized course system of the user according to the ability and knowledge system required by adjusted the target career role.

In one embodiment, the personalized course system includes at least one of the following:
a basic course shared by each career role, a personalized general education course, a philosophy course, a professional course, and a vocational ability course.

In one embodiment, after completing the teaching of the corresponding courses in the personalized course system, the method further includes:
receiving a career role establishment request of the user, and establishing a new target career role for the user according to the career role establishment request.

According to another aspect of the embodiment of the present invention, an career aspiration-based educational systems is also provided, including:
processor; and
memory storing computer program code;
when the computer program code is executed by the processor, it causing the education system to execute the career aspiration-based educational method according to any one of the preceding items.

The education method and system based on career aspirations provided by the embodiments of the present invention can determine and recommend an ideal career role for each user, and determine the ability and knowledge system that the user should have according to the target career role selected by the user, and then customize the personalized course system of the user for teaching. By providing each user with the teaching of the ability and knowledge course corresponding to the career aspiration, the personalized education program is realized.

Furthermore, artificial intelligence is used to make psychological portraits of users to identify the user's personalized characteristics, and then determine and recommend the user's ideal career role based on this, which can more accurately determine the user's career aspiration and precisely lock the user and career role.

Furthermore, according to the ability and knowledge system required by the target career role, the user's personalized course system can be obtained by using the big data analysis ability to screen the user's personalized course system from the pre-established educational course library that gathers global high-quality educational resources, which can effectively use the existing massive educational resources form the personalized course system for each user.

Further, through the use of block-chain technology in the online teaching process to achieve anti-tampering, mature audio and video technology and advanced holographic image technology are used to build an online education learning platform and a simulation practice platform to improve the privacy, security and safety of teaching.

The above description is only an overview of the technical solution of the present invention. In order to better understand the technical means of the present invention, it can be implemented according to the contents of the description, and in order to make the above and other purposes, features and advantages of the present invention more obvious and understandable, the specific embodiments of the present invention are enumerated below.

Those skilled in the art will be more aware of the above and other objects, advantages and features of the present invention according to the following detailed description of specific embodiments of the present invention in conjunction with the accompanying drawings.

### DESCRIPTION OF DRAWINGS

Various other advantages and benefits will become apparent to those of ordinary skill in the art upon reading the following detailed description of the preferred embodiment. The drawings are only for the purpose of illustrating a preferred embodiment and are not to be considered as limiting the invention. Also throughout the drawings, the same reference numerals are used to designate the same components. In the attached picture:
FIG. 1 shows a schematic flow chart of a career aspiration-based educational method according to an embodiment of the present invention;
FIG. 2 shows a schematic flow chart of a career aspiration-based educational method according to another embodiment of the present invention;
FIG. 3 shows a schematic structural diagram of an career aspiration-based educational systems according to an embodiment of the present invention.

### EMBODIMENTS OF THE PRESENT APPLICATION

Exemplary embodiments of the present disclosure will be described in more detail below with reference to the accompanying drawings. Although exemplary embodiments of the present disclosure are shown in the drawings, it should be understood that the present disclosure may be embodied in various forms and should not be limited by the embodiments set forth herein. Rather, these embodiments are provided for more thorough understanding of the present disclosure and to fully convey the scope of the present disclosure to those skilled in the art.

In order to solve the above technical problems, an embodiment of the present invention provides a career aspiration-based educational method and system. The educational method and system provided by the present invention can be applied to various levels of education, especially for higher education, such as the education of college students.

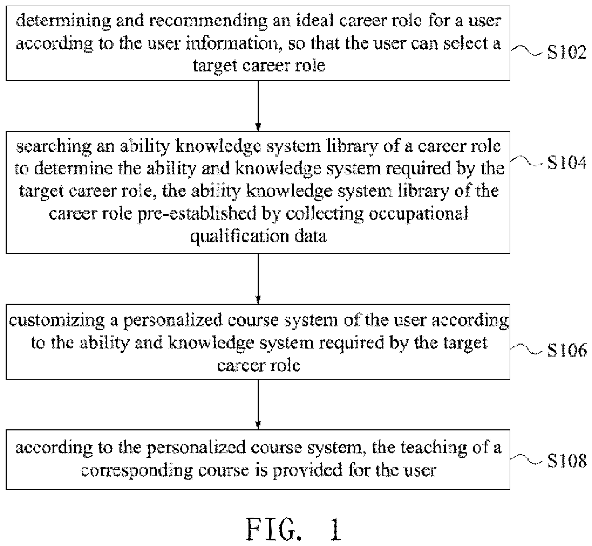

FIG. 1 shows a schematic flowchart of a career aspiration-based educational method according to an embodiment of the present invention. Referring to FIG. 1, the career aspiration-based educational method may at least include the following steps S102 to S108.

Step S102, determining and recommending an ideal career role for a user according to the user information, so that the user can select a target career role.

Step S104, searching an ability knowledge system library of a career role to determine the ability and knowledge system required by the target career role, the ability knowledge system library of the career role pre-established by collecting occupational qualification data.

Step S106, customizing a personalized course system of the user according to the ability and knowledge system required by the target career role.

Step S 108, according to the personalized course system, the teaching of a corresponding course is provided for the user.

The career aspiration-based educational method provided by the embodiment of the present invention can determine and recommend an ideal career role for each user, and determine the ability and knowledge system that the user should have according to the target career role selected by the user, and then can customize the personalized course system of the user for teaching. By providing each user with the ability and knowledge course teaching corresponding to the career aspiration, the personalized education program is realized.

In step S102 above, the user information may be obtained through user registration. User information may include, but is not limited to, the user's name, age, region, educational experience, major of study, hobbies, personality traits, etc. Collecting user information during user registration can improve the convenience and accuracy of information collection.

In some embodiments, global occupational role data can be collected in advance, and the association relationship between different groups and occupational roles can be obtained through big data analysis, and then the ideal occupational role can be determined and recommended for users based on the association relationship obtained by analysis and user information. The recommendation page can take various forms, such as pop-up window, table, etc. The invention does not limit this.

In a preferred embodiment, step S 102 may be further implemented as: according to the user information, artificial intelligence (AI) is used to make a psychological portrait of the user, so as to identify the personalized characteristics of the user. Furthermore, according to the user's personalized characteristics, the user's ideal career role is determined and recommended. Through psychological profiling, it is possible to accurately identify individual characteristics such as the user's personality traits, personality strengths and weaknesses, etc., so that the user's career aspiration can be more accurately determined, and the user and career role can be precisely locked. In the embodiment of the present invention, existing AI psychological portrait methods can be used, such as using artificial intelligence robots to perform psychological portraits of users to describe psychological characteristics, etc. Of course, other methods can also be used, and the present invention does not specifically limit this.

Through the use of artificial intelligence to make accurate portraits of users, and then put forward the education model of career aspiration guidance and suggestions, the personalized training goal of "thousands of people and thousands of faces" has been truly realized.

In step S104 above, the knowledge system library of the competence of the career role may be pre-established by collecting occupational qualification data.

In some embodiments, occupational qualification catalogs issued by the United Nations, China and other regions can be collected as occupational qualification data, and the competency knowledge system database of occupational roles can be established according to the corresponding knowledge and ability of each occupational role recorded in these occupational qualification catalogs. For example, according to the professional qualification catalogue issued by China, registered chemical engineers are required to possess the knowledge and ability stipulated in the Construction Law of the People's Republic of China, the Decision of The State Council on revising the Regulations on the Administration of Survey and Design of Construction Projects, the Regulations on the Administration of Registered Survey and Design Engineers, and the Interim Provisions on the Qualification System for Registered Chemical Engineers.

In some embodiments, the data of outstanding successful people in various career role can also be collected as professional qualification data, and the knowledge and abilities required for various career role can be summarized by performing big data analysis on the data of these successful people quality.

Of course, the above two kinds of data can also be combined to pre-establish a career role knowledge system database.

In step S106 above, a personalized course system can be customized for the user according to the ability and knowledge system required by the user's target career role, so as to realize personalized education for career aspirations.

Specifically, in step S 106, according to the ability and knowledge system required by the target career role, the required courses are selected from the pre-established education course library through big data analysis to form the user's personalized course system. The pre-established educational course library can be established by collecting global high-quality educational resources, including courses from different educational institutions (such as universities, technical training institutions, etc.) around the world, and can be continuously updated according to the changes in the courses of these educational institutions. As a result, it is possible to break through property rights barriers and cooperate with leading enterprises (organizations) in the industry to dynamically update the training plan.

Furthermore, through the use of big data technology to accurately analyze and obtain a personalized course system exclusive to each user, thereby forming a large number of personalized talent training programs, it can accurately connect with a large number of trainees and teachers who meet their ability training needs .

In some embodiments, the user's personalized course system may include offline courses and/or online courses. By providing users with an online and offline hybrid overall talent training program, the flexibility and comprehensiveness of teaching can be improved.

Specifically, the user's personalized course system may include at least one of basic courses, personalized general education courses, philosophy courses, professional courses, vocational ability courses, and the like. The basic course can be, for example, an existing basic course in a university, which can spread to all career role, that is, the basic course can be shared by all career role. General education courses can refer to courses that provide knowledge and values that are common among different groups of people, such as literature and art courses, history and culture courses, social analysis courses, moral ideal courses, language courses, etc. In practical application, the personalized general education courses required by users can be matched according to different individual users in the existing general education courses. Philosophy courses (such as psychology courses) can provide users with non-utilitarian life value and emotional maturity improvement. Professional courses and professional ability courses can provide users with continuously enriched and optimized professional knowledge and special professional ability training, so as to dynamically support the knowledge and abilities required by career role. Through rich courses and ability training, users will be closer to their career role and more able to meet the needs of the workplace.

In step S108 above, the user is provided with the teaching of the corresponding course according to the personalized course system customized for the user, so as to realize the personalized education of "thousands of people and thousands of faces".

For offline courses, it can provide appointments, reminders, etc. to ensure that users can teach courses on time and avoid missing courses.

For online courses, considering the characteristics of the Internet, a variety of technologies can be used to ensure the privacy, security and teaching effect of teaching.

In some embodiments, block-chain technology can be applied to online education by taking advantage of the tamper-proof characteristics of block-chain to ensure the privacy and security of teaching. For example, the online course in the user's personalized course system can be stored in a distributed storage system (such as distributed multiple servers or server clusters), and the connection between the user's online learning client and the distributed storage system is established through block-chain technology, and the smart contract or hash operation and digital signature of the block-chain are used to prevent the online course of each user from being tampered with or stolen.

In some embodiments, mature audio and video technology and/or advanced holographic image technology can also be used to build an online education learning platform and a simulation practice platform. In this way, the teaching methods can be more flexible and diverse, and the teaching effect is better. In particular, holographic imaging technology can realize online high-simulation simulation teaching, and better ensure the teaching effect while realizing distance education.

In the education method provided by the present invention, during the personalized teaching process, the user's career aspiration (ie, the target career role) can also be adjusted according to the user's needs or changes, so as to provide the user with more appropriate personalized courses.

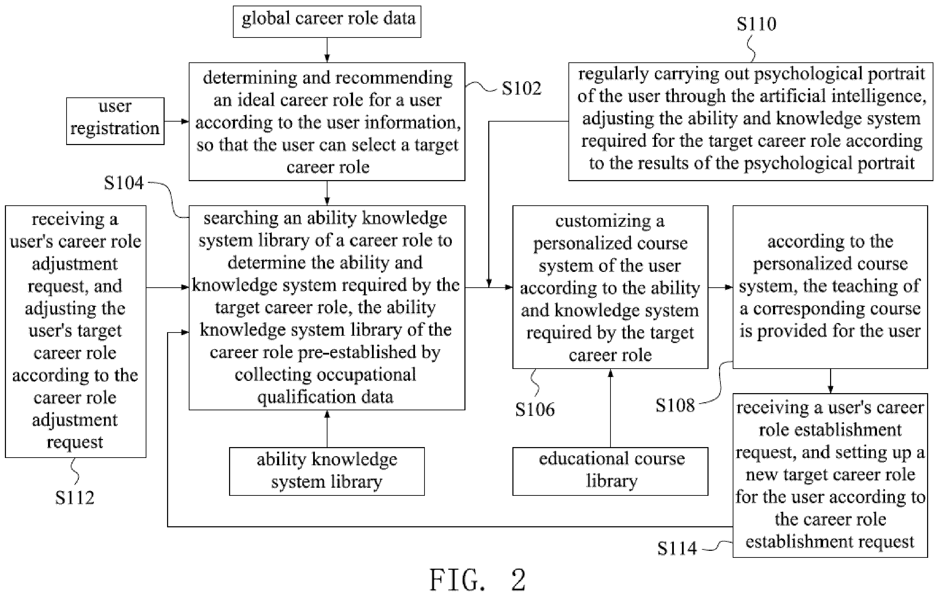

FIG. 2 shows a schematic flowchart of a career aspiration-based educational method according to another embodiment of the present invention.

Referring to FIG. 2, in some embodiments, the career aspiration-based educational method of the present invention may also include step S110: regularly carrying out psychological portrait of the user through the artificial intelligence, adjusting the ability and knowledge system required for the target career role according to the results of the psychological portrait. Correspondingly, after adjusting the ability and knowledge system required by the target career role, step S106 can be continued, wherein the user's personalized course system is formulated according to the adjusted ability and knowledge system required by the target career role, so as to achieve the user's optimization of personalized course system. The way to make a psychological portrait of the user is as described above, and will not be repeated here. Step S110 can be carried out at different nodes of the educational method of the present invention, for example, it can be executed after determining the ability and knowledge system required by the target career role selected by the user, or after customizing the personalized course system for the user according to the ability and knowledge system required by the target career role, or even in the process of providing the user with the teaching of a corresponding course according to the personalized course system. Through regular carrying out psychological portraits, we can timely grasp the changes of users' personalized characteristics and career needs, so that the ability requirements of users can be corrected, optimized and enriched in time, and then the personalized course system of users can be adjusted accordingly, making the teaching provided more suitable for users' career needs.

Continuing to refer to FIG. 2, in some embodiments, the career aspiration-based educational method of the present invention may further include step S 112: receiving a user's career role adjustment request, and adjusting the user's target career role according to the career role adjustment request. Correspondingly, after adjusting the target career role of the user, step S104 may be continued, wherein the capability knowledge system library of the career role is searched to determine the ability and knowledge system required by the adjusted target career role. Furthermore, step S106 is continued, wherein the personalized course system is re-customized for the user according to the adjusted ability and knowledge system required by the target career role. Step S112 can be performed at different nodes of the education method of the present invention, for example, it can be performed after the user selects the target career role, or after the ability and knowledge system required by the target career role are determined according to the target career role selected by the user. It can also be executed after customizing the personalized course system of the user according to the ability and knowledge system required by the target career role, or even during the process of providing the teaching of a corresponding course for the user according to the personalized course system. By adjusting the target career role according to the user's needs, the personalized course system customized for the user can be adjusted to make it more suitable for the user's needs.

In practical applications, after providing users with the teaching of corresponding courses in their personalized course system, users can form the professional ability, quality, value, etc. needed in the workplace, and help users enter career role smoothly. After the user enters a career role, the education method of the present invention can still provide the user with training courses that meet the requirements to continue training and further improve the user's ability. The process steps of continuing training are similar to the steps of the education method described above, and will not be repeated here.

Further, as shown in FIG. 2, after the user completes the teaching of the corresponding courses in the personalized course system and realizes the current career aspiration, a new career aspiration can be set up to continue learning for the new career aspiration. Specifically, in some embodiments, the career aspiration-based educational method of the present invention may further include step S114: receiving a user's career role establishment request, and setting up a new target career role for the user according to the career role establishment request. After setting up a new target career role for the user, it may return to step S104 for a new round of education based on career aspiration. In this way, continuous personalized education for users can be realized, and talents in various aspects can be cultivated.

It should be noted that the numbers of steps S110 , S112 , and S 114 above are only used to distinguish different steps, and do not indicate the sequence relationship between the steps.

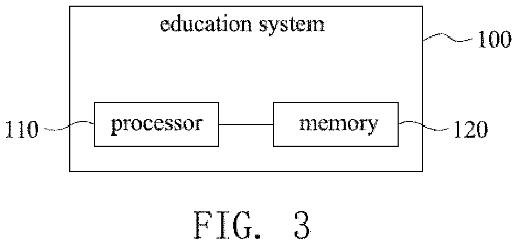

Based on the same inventive idea, the embodiment of the present invention also provides an career aspiration-based educational systems. FIG. 3 shows a schematic structural diagram of an education system 100 based on career aspirations according to an embodiment of the present invention. Referring to FIG. 3, the education system 100 includes a processor 110 and a memory 120. The memory 120 stores computer program codes. When the computer program code is executed by the processor 110, it will cause the education system 100 to execute the career aspiration-based educational method in any of the foregoing embodiments or a combination of the embodiments.

According to any one of the above optional embodiments or a combination of multiple optional embodiments, the embodiments of the present invention can achieve the following beneficial effects:
The education method and system based on career aspirations provided by the embodiments of the present invention can determine and recommend an ideal career role for each user, and determine the ability and knowledge system that the user should have according to the target career role selected by the user, and then customize it for the user personalized course system for teaching. By providing each user with the ability and knowledge course teaching corresponding to the career aspiration, the personalized education program is realized.

Furthermore, artificial intelligence is used to make psychological portraits of users to identify the user's personalized characteristics, and then determine and recommend the user's ideal career role based on this, which can more accurately determine the user's career aspiration and precisely lock the user and career role.

Furthermore, according to the ability and knowledge system required by the target career role, the user's personalized course system can be obtained by using the big data analysis ability to screen the user's personalized course system from the pre-established educational course library that gathers global high-quality educational resources, which can effectively use the existing massive educational resources form a personalized course system for each user. At the same time, based on the massive global knowledge data, artificial intelligence technology and big data technology are used to extract relevant courses or knowledge content for career role. Through analysis and screening, a personalized training system is established together with offline courses.

Further, block-chain technology is adopted in the process of online teaching to achieve tamper-proof, and mature audio and video technology and advanced holographic image technology are adopted to build online education learning platform and simulation practice platform to improve the privacy, security and effect of teaching.

Those skilled in the art can clearly understand that for the specific working processes of the above-described systems, devices, and units, reference can be made to the corresponding processes in the foregoing method embodiments, and for the sake of brevity, details are not described here.

In addition, each functional unit in each embodiment of the present invention may be physically independent of each other, or two or more functional units may be integrated together, or all functional units may be integrated into one processing unit. The above-mentioned integrated functional units can be implemented not only in the form of hardware, but also in the form of software or firmware.

Those skilled in the art can understand that: if the integrated functional unit is implemented in the form of software and sold or used as an independent product, it can be stored in a computer-readable storage medium. Based on this understanding, the essence of the technical solution of the present invention or all or part of the technical solution can be embodied in the form of software products, the computer software products are stored in a storage medium, which includes a number of instructions to make a A computing device (such as a personal computer, a server, or a network device, etc.) executes all or part of the steps of the methods described in the various embodiments of the present invention when executing the instructions. The aforementioned storage medium includes: U disk, mobile hard disk, read-only memory (ROM), random access memory (RAM), magnetic disk or optical disk, and various media capable of storing program codes.

Alternatively, all or part of the steps for realizing the aforementioned method embodiments may be implemented by program instruction-related hardware (such as a personal computer, server, or computing device such as a network device), and the program instructions may be stored in a computer-readable memory In the medium, when the program instructions are executed by the processor of the computing device, the computing device executes all or part of the steps of the methods described in the various embodiments of the present invention.

Finally, it should be noted that: the above embodiments are only used to illustrate the technical solutions of the present invention, rather than limit them; although the present invention has been described in detail with reference to the foregoing embodiments, those of ordinary skill in the art should understand that: Within the spirit and principles of the present invention, it is still possible to modify the technical solutions described in the foregoing embodiments, or to perform equivalent replacements for some or all of the technical features; and these modifications or replacements do not make the corresponding technical solutions deviate from protection scope of the present invention.

## Claims

1. A career aspiration-based educational method, comprising:
determining and recommending an ideal career role for a user according to a user information so that the user can select a target career role;
searching an ability knowledge system library of a career role to determine the ability and knowledge system required by the target career role, the ability knowledge system library of the career role pre-established by collecting occupational qualification data;
customizing a personalized course system of the user according to the ability and knowledge system required by the target career role;
according to the personalized course system, providing teaching of a corresponding course for the user.

2. The educational method according to claim **1,** wherein,
the step of determining and recommending the ideal career role for a user according to a user information comprises:
according to the user information, carrying out a psychological portrait of the user through artificial intelligence to identify a personalized characteristic of the user;
determining and recommending the ideal career role for the user according to the personalized characteristic of the user.

3. The educational method according to claim **1,** wherein,
the step of customizing the personalized course system of the user according to the ability and knowledge system required by the target career role comprises:
according to the ability and knowledge system required by the target career role, selecting a required course from the pre-established education course library through big data analysis to form the personalized course system of the user.

4. The educational method according to claim **1,** wherein the personalized course system comprises an offline course and/or an online course.

5. The educational method according to claim **4,** wherein, when the personalized course system comprises the online course, the step of according to the personalized course system, providing teaching of a corresponding course for the user comprises:
providing a teaching resource for the online course to the user based on at least one of the following:
block-chain technology, audio and video technology, holographic imaging technology.

6. The educational method according to claim **1,** wherein, after customizing a personalized course system of the user according to the ability and knowledge system required by the target career role, the method further comprises:
regularly carrying out psychological portrait of the user through the artificial intelligence, adjusting the ability and knowledge system required for the target career role according to the results of the psychological portrait, and optimizing the personalized course system of the user according to an adjusted ability and knowledge system required for the target career role.

7. The educational method according to claim **1,** wherein, after customizing the personalized course system of the user according to the ability and knowledge system required by the target career role, the method further comprises:
receiving a career role adjustment request for the user, and adjusting the target career role of the user according to the career role adjustment request;
searching the ability knowledge system library of the career role to determine an ability and knowledge system required by the adjusted target career role;
customize a personalized course system of the user according to the ability and knowledge system required by adjusted the target career role.

8. The educational method according to claim **1,** wherein the personalized course system comprises at least one of the following:
a basic course shared by each career role, a personalized general education course, a philosophy course, a professional course, and a vocational ability course.

9. The educational method according to claim **1,** wherein, after completing the teaching of the corresponding courses in the personalized course system, the method further comprises:
receiving a career role establishment request of the user, and establishing a new target career role for the user according to the career role establishment request.

10. A career aspiration-based educational system, comprising:
a processor; and
a memory storing computer program code;
when the computer program code is executed by the processor, it causing the educational system to execute the educational method based on the career aspirations according to any one of claims **1-9.**
